## Europäisches Patentamt
## European Patent Office
## Office européen des brevets

(19)

(11) Veröffentlichungsnummer: **0 013 330**
**B1**

(12) # EUROPÄISCHE PATENTSCHRIFT

(45) Veröffentlichungstag der Patentschrift:
**02.11.83**

(51) Int. Cl.³: **C 08 L 21/00** // (C08L21/00,
61/06, 61/28)

(21) Anmeldenummer: **79104787.1**

(22) Anmeldetag: **30.11.79**

(54) Verfahren zur Herstellung verstärkter Kautschukvulkanisate sowie die so erhaltenen Artikel.

(30) Priorität: **04.12.78 DE 2852311**

(43) Veröffentlichungstag der Anmeldung:
**23.07.80 Patentblatt 80/15**

(45) Bekanntmachung des Hinweises auf die Patenterteilung:
**02.11.83 Patentblatt 83/44**

(84) Benannte Vertragsstaaten:
**AT BE CH DE FR GB IT LU NL SE**

(56) Entgegenhaltungen:
**CH - A - 458 721**
**FR - A - 1 378 319**
**FR - A - 2 218 347**
**GB - A - 1 039 378**
**GB - A - 1 163 594**
**GB - A - 1 230 814**

(73) Patentinhaber: **HOECHST AKTIENGESELLSCHAFT,
Postfach 80 03 20, D-6230 Frankfurt am Main 80 (DE)**

(72) Erfinder: **Giller, Arnold, Dr., Fleckenbornstrasse 25,
D-6204 Taunusstein (DE)**
Erfinder: **Weil, Joachim, Weidenstrasse 11,
D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung verstärkter Kautschukvulkanisate sowie die so erhaltenen Mittel

Es ist bekannt, helle Gummiqualitäten aus natürlichem oder synthetischem Kautschuk durch Vulkanisation mit Schwefel unter Zusatz von mindestens 0,5%, bezogen auf das Gewicht des Kautschuks, eines härtbaren verätherten Kondensationsproduktes aus Aldehyden und Harnstoff und/ oder Melamin, bzw. deren Derivaten herzustellen. Die zur Verstärkung verwendeten Melaminharze können als feste pulverisierte Kondensationsprodukte verwendet werden (DE-A-1251518).

Es ist ebenso bekannt, harte Kautschukvulkanisate durch Vulkanisation von Kautschukmischungen mit Schwefel unter Zusatz von Hexamethoxymethylmelamin oder Harzen, die aus Melamin oder Guanaminen und Aldehyden erhalten und deren Alkylolgruppen durch Alkohole veräthert worden sind, herzustellen (DE-A-1292842). Bei dem zuletzt genannten Verfahren kann die härtende Wirkung durch Zusatz von Polyesterharzen aus Dicarbonsäuren und mehrwertigen Alkoholen, die eine Säurezahl von mindestens 50 aufweisen, intensiviert werden.

Nach einer weiteren Druckschrift (GB-A-1225550) können Gummimischungen aus Natur- oder Synthesekautschuk durch Zusatz von Novolaken und Resolen im Verhältnis 9:1 bis 1:9 verstärkt werden.

Die genannten Verfahren sind zwar gemäss den genannten Patentschriften realisierbar und bringen die dort aufgeführten Effekte, haben aber nur begrenzte wirtschaftliche Bedeutung erlangt.

Praktische Bedeutung hat dagegen die Verstärkung von Gummiqualitäten der verschiedensten Art durch Zusatz von Phenolnovolaken und Hexamethylentetramin als Härtungsmittel (DE-PS1669847). Der verstärkende Effekt der verwendeten Harze kann gegebenenfalls durch die Menge des verwendeten Härtungsmittels wirksam geregelt werden (DE-OS1769456). Diese in der Praxis bewährte Verstärkung von Gummiqualitäten durch ein Novolakharz und Hexamethylentetramin wird in neuerer Zeit aus Gründen des Umweltschutzes kritisch bewertet, weil Hexamethylentetramin die menschliche Haut irritiert und zu Ausschlägen Anlass geben soll.

Ferner ist aus der CH-A-458721 ein Verfahren zur Herstellung von vulkanisierbaren Mischungen unter Verwendung von unlöslichen und unschmelzbaren Aminoplasten als Füllstoff bekannt. Derartige Melaminharze sind jedoch nicht mehr reaktiv und mit den gemäss der vorliegenden Erfindung verwendeten Harzen nicht vergleichbar.

Es wurde überraschend gefunden, dass zur Verstärkung von Gummi geeignete Novolake durch Zugabe von reaktiven Melaminharzen gehärtet werden, wobei besonders wirkungsvolle Verstärkungseffekte erzielt werden. Gegenstand der Erfindung ist also ein Verfahren zur Herstellung von verstärkten Vulkanisaten durch Vulkanisation von Natur- oder Kunstkautschuk-Mischungen mit Novolakharzen auf der Grundlage von Phenol bzw. Alkylphenolen und Melaminharzen, das dadurch gekennzeichnet ist, dass das Melaminharz ein reaktives Melaminharz ist, das als Härter für das Novolakharz wirkt, durch Umsetzung von Melamin mit 0,5 bis 6 Mol Aldehyd erhalten worden ist und in einem Anteil von 2 bis 120, vorzugsweise 2 bis 50 Gew.-%, bezogen auf Novolakharz, verwendet wird, dass die phenolische Komponente des Novolakes aus der Gruppe Phenol, Bisphenole, Alkylphenole, Gemische von Alkylphenolen mit Phenol ausgewählt ist, wobei sie noch Zusätze von Resorcin, Phenylphenol oder Polyalkylphenolen enthalten kann und zwar in einer solchen Menge, dass das Molverhältnis der Gesamtmenge dieser Zusätze zur Gesamtmenge der anderen Phenole bis 1:2 beträgt und dass die Mischungstemperatur in irgendeiner Phase der Mischungsherstellung nach Zugabe des Novolakharzes dessen Schmelzpunkt überschreitet.

Die im Melaminharz vorhandenen Methylolgruppen können frei oder zumindest teilweise durch Umsetzung mit einwertigen Alkoholen mit 1 bis 12 C-Atomen veräthert sein.

Melaminharze allein, wie sie gemäss den oben erwähnten bekannten Verfahren verwendet werden könne, haben in Gummimischungen der verschiedensten Art eine deutlich schwächere Wirkung als die üblicherweise verwendeten Novolak-Hexamethylentetraminsysteme. Soweit feste, reaktive Melaminharze verwendet werden, hängt deren Effekt in entscheidendem Masse von der Feinheit ihrer Teilchen ab. In der Praxis wird nur in Ausnahmefällen die Teilchengrösse von aktiven Füllstoffen erreicht. Auch bei dem erfindungsgemässen Verfahren können gegebenenfalls feste Melaminharze eingesetzt werden. In der Regel wird man ein Melaminharz mit einer Teilchengrösse von höchstens 100 μm, vorzugsweise etwa 50 μm verwenden. In gelöster Form lassen sich hochreaktive Melaminharze verhältnismässig leicht herstellen. Harze dieses Typs sind nur bedingt zur Einarbeitung in Kautschuke geeignet, weil die erforderlichen Lösungsmittel wie höhere Alkohole, Wasser, Polyglykole oder Ester mit den meisten Kautschuktypen nicht verträglich sind. Sie müssen im Zuge des Einmischverfahrens verdampft werden. Hexamethoxymethylmelamin selbst ist zwar gut einarbeitbar, härtet aber nur langsam. Aus diesem Grund hat es nicht den Effekt der praktisch verwendeten Phenolnovolak-Hexamethylentetramin-Gemische.

Hexamethoxymethylmelamin allein reagiert beim Erhitzen nur sehr langsam mit sich selbst. Falls eine Reaktion bei Raumtemperatur gewünscht wird, erfordert die Verwendung dieser Substanz daher den Zusatz starker Säuren, z.B. Salzsäure oder Toluolsulfonsäure. Aus diesem Grund ist es überraschend, dass nach dem erfindungsgemässen Verfahren die Kautschukmischungen, denen zur Verstärkung Phenolnovolake der verschiedensten Art zugesetzt wurden, durch Melaminharze der beschriebenen Art, insbesondere Hexamethoxymethylmelamin bzw. die entsprechenden höheren mehrkernigen Kondensationsprodukte der monomeren Melaminharze, sehr energisch gehärtet werden. Es wird sogar vielfach noch ein intensiverer Verstärkungseffekt als mit Novolak-Hexamethylentetramin-Gemischen erzielt. Die nach dem erfindungsgemässen Verfahren erzielten Verstärkungseffekte zeigen sich insbesondere in einer Steigerung der Spannungswerte bei 100, 200 und 300% Dehnung sowie in einer Steigerung der Vulkanisathärte.

Bei Anwendung des Verfahrens nach der Erfindung kann die Geschwindigkeit der Harzhärtung und der Härtungseffekt selbst durch Zusatz geeigneter ein- oder mehrbasischer organischer Säuren mit mindestens 2 und höchstens 20 C-Atomen bzw. deren Anhydriden, z.B. Phthalsäure, Benzoesäure, Maleinsäure, Fumarsäure, Tri- oder Pyromellithsäure und deren Anhydriden oder Sulfonsäuren wie Naphthalindisulfonsäure oder Sulfanilsäure, wesentlich beschleunigt und intensiviert werden.

Anstelle von oder zusammen mit den organischen Säuren können auch Polyesterharze aus Polycarbonsäuren und mehrwertigen Alkoholen mit einer Säurezahl von 20 und höher, z.B. bis 100, die auch durch Monocarbonsäuren und einwertige Alkohle modifiziert sein können, mitverwendet werden. Der Anteil der einwertigen Komponenten soll jedoch höchstens 25 Äquivalent-%, bezogen auf die Säure- bzw. Alkohol-Komponente, ausmachen.

Die zur Beschleunigung dienenden organischen Säuren bzw. Polyesterharze können in Mengen von 0,1 bis etwa 5, vorzugsweise 1,5 bis 3 Gew.-%, bezogen auf Kautschuk zugesetzt, werden. Grössere oder kleinere Säuredosierungen sind durchaus möglich.

An sich kann die Beschleunigung der Härtung auch mit Hilfe von starken anorganischen Säuren, wie Phosphorsäure oder sauren Phosphorsäureestern, erreicht werden. Diese Arbeitsweise ist jedoch wegen der im Umgang mit solchen Säuren erforderlichen Vorsichtsmassnahmen weniger zweckmässig.

Die erfindungsgemäss eingesetzten Ausgangsmischungen können in üblicher Weise in Innenmischern oder auf Mischwalzen hergestellt werden. Beim Einarbeiten der Harze ist darauf zu achten, dass die Mischungstemperatur in irgendeiner Phase der Mischungsherstellung den Schmelzpunkt der Harze, insbesondere der Novolakharze überschreitet, damit sich diese völlig verteilen können. Ferner ist wichtig, dass die als Härtungsmittel zu verwendenden Melaminharze so eingearbeitet werden, dass es nicht zu einer vorzeitigen Eigenkondensation oder zu einer vorzeitigen Reaktion mit dem zu härtenden Novolak kommt. Das ist möglich, wenn die Melaminharze am Ende des Mischvorganges bei nicht zu hohen Temperaturen eingearbeitet werden. Die Temperatur richtet sich nach dem jeweils verwendeten Melaminharztyp, der Säuremenge und der Zeit. Sie liegt für die Zugabe des Melaminharzes und des Novolaks im allgemeinen bei 80° bis 120°C. In Einzelfällen kann sie auch höher – z.B. bei Verwendung von Hexamethoxymethylmelamin in Abwesenheit einer Säure – oder auch tiefer sein.

Geeignete Kautschuktypen sind beispielsweise Naturkautschuk, Styrolkautschuk, Acrylnitrilkautschuk, Polybutadien, Butylkautschuk, Äthylen-Propylen-Dien-Terpolymer-Kautschuk oder deren Gemische, wie sie üblicherweise in der Reifenindustrie oder zur Herstellung technischer Gummiwaren verwendet werden.

Geeignete Novolak-Harze sind z.B. solche, die aus Phenol, Bisphenolen, z.B. Diphenylolpropan oder Diphenylolmethan, oder Gemischen aus Phenol und Alkylphenolen, wie tertiär-Butylphenol, Octylphenol oder Nonylphenol und Aldehyden, vorzugsweise Formaldehyd im sauren Gebiet erhalten werden. Die Novolak-Harze können ausserdem weichmachende Anteile, wie Polyäthylenglykole, Tallöl oder andere geeignete Plastifiziermittel enthalten. Grundsätzlich können auch Novolak-Harze verwendet werden, die ausschliesslich aus Alkylphenolen, die eine Alkylgruppe von 1 bis 12 C-Atomen tragen, hergestellt sind; diese kommen jedoch nur bedingt in Frage, da sie weniger härtbar sind. Ferner können die Novolak-Harze Zusätze von Resorcin oder Phenylphenol oder mehrere Alkylgruppen enthaltenden Phenolen enthalten. Für den praktischen Gebrauch sind Novolak-Harze aus Phenol und Gemischen aus Phenol und Cashew-Nussschalenöl sowie aus Phenol und Alkylphenolen mit 4 bis 12 C-Atomen im Alkylteil, insbesondere p-tert. Butyl-, Octyl- oder Nonylphenol bevorzugt. Der Anteil der substituierten Phenole im Novolak kann dabei variieren, wobei jedoch der Novolak noch härtbar sein soll. So wird man im allgemeinen einen Anteil an Alkylphenol von höchstens 70 Mol-% der gesamten Phenolkomponente wählen.

Der Anteil des Novolaks beträgt in der Regel 1 bis 30, vorzugsweise 3 bis 20 Gew.-%, bezogen auf das Elastomere. In Einzelfällen lassen sich auch grössere Mengen, z.B. 100 und mehr Gew.-%, bezogen auf das Elastomere, verwenden. Bei einem derart hohen Novolakanteil erhält man harte Produkte, die sich in ihren Eigenschaften wesentlich von den üblichen hochelastischen Kautschukvulkanisaten unterscheiden.

Bevorzugte Melaminharze sind Hexamethoxymethylmelamin oder entsprechende höherkondensierte mehrkernige Produkte oder zumindest teilweise verätherte Trimethylol-, Tetramethylol-, oder Pentamethylol- Melaminharze. Der Kondensationsgrad der Aldehyd-, insbesondere Formaldehyd-Harze und ihr Gehalt an freien Methylolgruppen kann in üblicher Weise durch entsprechende Einstellung des Reaktionsmediums geregelt werden. Die freien Methylolgruppen können mit einwertigen Alkoholen mit 1 bis 12, vorzugsweise 1 bis 8 C-Atomen veräthert sein, wie Methanol, den verschiedenen Butanolen, Äthylhexylalkohol, n-Octanol, Nonanol, Dodecylalkohol.

Die zur Härtung der Novolak-Harze erforderlichen optimalen Mengen Melaminharze müssen im Prinzip in Vorversuchen, die einfach durchzuführen sind, ermittelt werden. Im allgemeinen sind auf 100 Gewichtsteile Novolak-Harz etwa 1 bis 80, vorzugsweise 2 bis 50 Gew.-% Melaminharz erforderlich.

Es ist auch möglich, anstelle von oder zusammen mit den Säuren auch Weichmacher, wie sie bei der Kautschukverarbeitung üblich sind, zuzugeben, beispielsweise aromatische Polyäther, Phthalsäureester oder dergleichen.

Als Füllstoffe können die handelsüblichen aktiven oder inaktiven Russe, Kieselsäuren, Kaoline, Kreide oder andere übliche Füllstoffe mitverwendet werden. Zur Vulkanisation wird in der Regel Schwefel in Zusammenhang mit den allseits bekannten Beschleunigern verwendet. In manchen Fällen kann jedoch auch ohne Schwefel gearbeitet werden. Die Vulkanisation in Gegenwart von Schwefel ist aber bevorzugt. Der Vulkanisationsverlauf kann durch Auswahl geeigneter in der Kautschuktechnologie üblicher Beschleuniger den praktischen Erfordernissen angepasst werden.

Aus den nach der Erfindung hergestellten, ein Novolak-Harz und ein Melaminharz enthaltenden Mischungen können technische Gummiartikel hergestellt werden; sie können aber auch für die Herstellung von Kraftfahrzeugreifen verwendet werden.

In den nachstehenden Beispielen bedeuten die Mengenangaben GT = Gewichtsteile.

Tabelle 1

| Mischung Nr. | V1 (Vergleich) | V2 (Vergleich) | 1 | 2 | 3 | 4 |
|---|---|---|---|---|---|---|
| Styrol-Butadien-Kautschuk[1]) | 100 | 100 | 100 | 100 | 100 | 100 |
| Russ N-330[2]) | 50 | 50 | 50 | 50 | 50 | 50 |
| Stearinsäure | 1,5 | 1,5 | 1,5 | 1,5 | 1,5 | 1,5 |
| ZnO | 5 | 5 | 5 | 5 | 5 | 5 |
| Alterungsschutzmittel | 2 | 2 | 2 | 2 | 2 | 2 |
| Schwefel | 2 | 2 | 2 | 2 | 2 | 2 |
| Phenolnovolak[3]) | – | 18 | 14 | 14 | 14 | 14 |
| Hexamethylentetramin | – | 2 | – | – | – | – |
| Hexamethoxymethylenmelamin[4]) | – | – | 6 | 6 | 6 | 6 |
| Benzoesäure | – | – | – | 3 | – | – |
| Diäthylenglykol | – | – | – | – | 3 | – |
| saures Phthalsäure-Pentaerythrit-Polyesterharz | – | – | – | – | – | 3 |
| Sulfenamidbeschleuniger | 1,2 | 1,2 | 1,2 | 1,2 | 1,25 | 1,25 |
| Tetramethylthiurammonosulfid | 0,2 | 0,2 | 0,2 | 0,2 | – | – |
| Zink-N-diäthyldithiocarbamat | – | – | – | – | 0,25 | 0,25 |
| **Vulkanisation 150°C 20 min** | | | | | | |
| Zerreissfestigkeit (MPa) | 25,6 | 22,2 | 25,0 | 22,5 | 21,9 | 23,4 |
| Zerreissdehnung (%) | 315 | 314 | 357 | 360 | 303 | 341 |
| Spannungswert bei 100%) Dehnung (MPa)) | 5,3 | 6,6 | 7,0 | 8,5 | 7,2 | 6,6 |
| Spannungswert bei 200%) Dehnung (MPa)) | 14,4 | 14,7 | 14,0 | 15,8 | 14,7 | 13,8 |
| Spannungswert bei 300%) Dehnung (MPa)) | 24,1 | 21,6 | 21,3 | 23,0 | 21,3 | 21,3 |
| Härte Shore A | 71 | 84 | 88 | 90 | 86 | 87 |

[1]) Styrol-Butadien-Kautschuk, harz-fettsäurehaltig mit 23,5% gebundenem Styrol
[2]) Russ für hohe Abriebfestigkeit. Verwendet wurde ein Kautschuk-Russ-Masterbatch aus 100 Gew.-Teilen Kautschuk und 50 Gew.-Teilen Russ
[3]) handelsüblicher Phenolnovolak, Fp 83–88° (Kapillarmethode)
[4]) Viskosität in Lieferform: 8–22 Pa.s bei 20°C

Diskussion der Ergebnisse von Tabelle 1

Die Mischungen V1 und V2 sind Vergleichsmischungen. Mischung V2 zeigt die Verstärkung einer Styrol-Butadien-Russ-Mischung mit einem handelsüblichen Phenolnovolak bei Härtung mit Hexamethylentetramin. Mischung 1 zeigt den Verstärkungseffekt nach der Erfindung bei Verwendung einer handelsüblichen, wasser- und lösemittelfreien, höherviskos eingestellten Hexamethoxymelaminqualität. Mischung 2 zeigt den Effekt der zur Beschleunigung der Härtung mit verwendeten Benzoesäure.

Die Vulkanisate der Mischung V2 zeichnen sich gegenüber Mischung V1 durch einen etwas höheren Spannungswert bei 100% und deutlich höhere Vulkanisathärte aus. Die nach der Erfindung hergestellte Mischung 1 gibt Vulkanisate mit einem weiter erhöhten Spannungswert bei 100% Dehnung und deutlich höherer Härte. Durch die Mitverwendung von Benzoesäure werden die Spannungswerte bei 100, 200 und 300% Dehnung und die Vulkanisathärte zusätzlich erhöht.

Wird anstelle des hochviskosen Hexamethoxymethylmelamins eine niedrigviskose Qualität (4000–8000 mPa.s) verwendet, können Vulkanisathärten über 90° Shore A erhalten werden.

Werden anstelle der 6 Gew.-Teile Hexamethoxymethylmelamin 6 Gew.-Teile eines pulverförmigen Melaminharzes, das durch Umsetzung von 1 Mol Melamin mit ca. 1,2 Mol Formaldehyd erhalten wurde, verwendet, so werden Vulkanisate erhalten, die in ihren Prüfdaten den Vulkanisaten der Mischung 1 weitgehend entsprechen.

Die nach der Erfindung hergestellten Mischungen 3 und 4 zeigen, dass plastifizierende Zusätze, wie Diäthylenglykol oder ein saures Phthalsäure-Pentaerythrit-Polyesterharz, mit Vorteil mitverwendet werden können. Durch das Diäthylenglykol wird die Mooney-Viskosität um ca. 10–15 Einheiten gegenüber einer Vergleichsmischung herabgesetzt. Das in Mischung 4 zugesetzte Polyesterharz mit der Säurezahl von ca. 200 begünstigt die Härtungsreaktion.

Tabelle 2

| Mischung Nr. | V5 | 6 | 7 | 8 | 9 | 10 | 11 |
|---|---|---|---|---|---|---|---|
| Styrol-Butadien-Kautschuk | 100 | 100 | 100 | 100 | 100 | 100 | 100 |
| Russ N-330 | 50 | 50 | 50 | 50 | 50 | 50 | 50 |
| Stearinsäure | 1,5 | 1,5 | 1,5 | 1,5 | 1,5 | 1,5 | 1,5 |
| ZnO | 5 | 5 | 5 | 5 | 5 | 5 | 5 |
| Alterungsschutzmittel | 2 | 2 | 2 | 2 | 2 | 2 | 2 |
| Schwefel | 2 | 2 | 2 | 2 | 2 | 2 | 2 |
| N-Cyclohexyl-2-benzothiazolsulfenamid | 1 | 1 | 1 | 1 | 1 | 1 | 1 |
| Tetramethylthiurammonosulfid | 0,2 | 0,2 | 0,2 | 0,2 | 0,2 | 0,2 | 0,2 |
| Dithiodimorpholin | – | – | – | – | – | 2,5 | – |
| Phenolnovolak[1] | – | 14 | 14 | 15 | 14 | 14 | 14 |
| Trimethylolmelamin | – | 6 | 6 | – | – | – | – |
| Pentamethylolmelaminharz[2] | – | – | – | 5 | – | – | – |
| Pentamethylolmelamintrimethyläther | – | – | – | – | 6 | 6 | – |
| Tetrabutoxydimethoxymethylmelamin[3] | – | – | – | – | – | – | 6 |
| Benzoesäure | – | – | 3 | 1,5 | – | – | – |
| Phthalsäure | – | – | – | – | 3 | 3 | 2 |
| Vulkanisation 145°C (in der Presse) min | 60 | 60 | 60 | 60 | 30 | 30 | 30 |
| Zerreissfestigkeit (mPa) | 19,4 | 20,6 | 19,4 | 22,2 | 20,3 | 19 | 18,8 |
| Zerreissdehnung (%) | 276 | 286 | 266 | 275 | 262 | 245 | 256 |
| Spannungswert 100% (mPa) | – | – | – | – | 6,6 | 7,5 | 6,3 |
| Spannungswert 200% (mPa) | 13,8 | 14,1 | 16,3 | 16,6 | 16,3 | 19,2 | 14,4 |
| Härte Shore A | 72 | 80 | 84 | 82 | 86 | 90 | 87 |
| Kerbzähigkeit (N/mm) | 10 | 9,8 | 10 | 9,9 | – | – | 12,5 |

[1] handelsüblicher Novolak, Fp 106°C (Ring und Kugel ASTM E 28–67)
[2] handelsüblicher Melaminharz, dynamische Viskosität (20°C) 4000–8000 mPa.s, beliebig wasserverdünnbar
[3] handelsübliches Melaminharz, Viskosität (20°C) 900–1800 mPa.s

Tabelle 3

| Mischung Nr. | V 12 | 13 | 14 |
|---|---|---|---|
| Styrol-Butadien-Kautschuk | 100 | 100 | 100 |
| Russ N-330 | 50 | 50 | 50 |
| Stearinsäure | 2 | 2 | 2 |
| ZnO | 4 | 4 | 4 |
| Alterungsschutzmittel | 2 | 2 | 2 |
| Schwefel | 2 | 2 | 2 |
| N-tert.-Butyl-2-benzothiazolsulfenamid | 1,2 | 1,2 | 1,2 |
| Zinkdiäthyldithiokarbamat | 0,25 | 0,25 | 0,25 |
| Phenolnovolak | – | 14 | 14 |
| Tetramethylolmelamin-di-butoxyharz[4] | – | 11 | – |
| Pentamethylolmelamintri-methyläther, mit Triäthylenglykol modifiziert | – | – | 8 |
| Vulkanisation 30 min 150°C (in der Presse) | | | |
| Zerreissfestigkeit (MPa) | 26,3 | 20,3 | 22,5 |
| Zerreissdehnung (%) | 297 | 281 | 270 |
| Spannungswert 100% (MPa) | 5,6 | 7 | 7,8 |
| Vulkanisathärte Shore A (°) | 72 | 88 | 87 |

[4] handelsübliches Melaminharz, 55%ig in Isobutanol, dynamische Viskosität (Lieferform) 300–800 mPa.s. Die Verwendung des Harzes erfolgte unter weitgehendem Ausschluss des Lösungsmittels.

Tabelle 4

| Mischung Nr. | 15 |
|---|---|
| Styrol-Butadien-Kautschuk | 100 |
| Russ N-330 | 50 |
| Stearinsäure | 1,5 |
| ZnO | 5 |
| Alterungsschutzmittel | 2,2 |
| Schwefel | 2 |
| Cyclohexylbenzothiazolsulfenamid | 1,1 |
| Tetramethylthiurammonosulfid | 0,2 |
| Phenolnovolak[5] | 14 |
| Resorcinnovolak[6] | 1,7 |
| Hexamethoxymethylmelamin | 6 |
| Benzoesäure | 2 |
| Vulkanisation 40 min 150°C (in der Presse) | |
| Zerreissfestigkeit (MPa) | |
| Zerreissdehnung (%) | 18,8 |
| Spannungswert 200% (MPa) | 215 |
| Härte Shore A (°) | 17,5 |
| | 87 |

[5] Handelsüblicher Phenolnovolak Fp 96°C (Ring und Kugel ASTM E 28–67).
[6] Handelsüblicher Resorcinnovolak Fp 65°C (Ring und Kugel ASTM E 28–67).

In den Tabellen 2 bis 4 wurden jeweils derselbe Kautschuk und derselbe Russ wie nach Tabelle 1 verwendet.

Diskussion der Ergebnisse von Tabellen 2 bis 4 Die Mischungen V5 und V12 sind Vergleichsmischungen. Wie der Vergleich der Härte und der Spannungswerte der erfindungsgemässen Mischungen 6 bis 8 in Tabelle 2 mit den entsprechenden Werten der Vergleichsprobe V5 zeigt, sind die Härte- und die Spannungswerte gegenüber denjenigen der Vergleichsprobe angestiegen. Die Mischungen 9 bis 11 zeigen noch eine stärkere Erhöhung der Härte und der Spannung, die vermutlich durch die kombinierte Wirkung der beiden Melaminharze bedingt ist.

In Tabelle 3 zeigen die erfindungsgemässen Mischungen 13 und 14 gegenüber der Vergleichsprobe V12 ebenfalls eine deutliche Verbesserung der Härte und des Spannungswertes. Die höhere Härte ist vermutlich auf das andere Beschleunigungssystem zurückzuführen.

Tabelle 4 lässt bei Probe 15 ein verstärktes Vulkanisat mit guten Spannungswerten und hoher Härte erkennen.

**Patentansprüche**

1. Verfahren zur Herstellung von verstärkten Vulkanisaten durch Vulkanisation von Natur- oder Kunstkautschuk-Mischungen mit a) Novolakharzen auf der Grundlage von Phenol bzw. Alkylphenolen und b) Melaminharzen, dadurch gekennzeichnet, dass das Melaminharz ein reaktives Melaminharz ist, das als Härter für das Novolakharz wirkt, durch Umsetzung von 1 Mol Melamin mit 0,5 bis 6 Mol Aldehyd erhalten worden ist und in einem Anteil von 2 bis 120 Gew.-%, bezogen auf Novolakharz, verwendet wird, dass die phenolische Komponente des Novolakharzes aus der Gruppe Phenol, Bisphenole, Alkylphenole, Gemische von Alkylphenolen mit Phenol ausgewählt ist, wobei sie gegebenenfalls noch Zusätze von Resorcin, Phenylphenol oder Polyalkyl-phenolen enthält in einer solchen Menge, dass das Molverhältnis der Gesamtmenge dieser Zusätze zur Gesamtmenge der anderen Phenole bis 1:2 beträgt und dass die Temperatur in irgendeiner Phase der Mischungsherstellung nach Zugabe des Novolakharzes dessen Schmelzpunkt überschreitet.

2. Verfahren nach Anspruch 1, dadurch gekennzeichnet, dass solche Melaminharze eingesetzt werden, deren Methylolgruppen, zumindest teilweise, mit einwertigen Alkoholen mit 1 bis 12, vorzugsweise bis 8 C-Atomen veräthert sind.

3. Verfahren nach Anspruch 1 oder 2, dadurch gekennzeichnet, dass die Vulkanisation in Gegenwart von Melaminharz in einem Anteil von 2 bis 80, vorzugsweise 2 bis 50 Gew.-% durchgeführt wird.

4. Verfahren nach einem oder mehreren der Ansprüche 1 bis 3, dadurch gekennzeichnet, dass die Vulkanisation in Gegenwart von anorganischen oder ein- oder zweibasischen organischen Säurekomponenten mit 2 bis 20 C-Atomen und/oder Polyesterharzen mit einer Säurezahl von mindestens 20 durchgeführt wird, wobei der Anteil der organischen Säurekomponente vorzugsweise 0,1 – 5 Gew.-%, bezogen auf Kautschuk, beträgt.

5. Verfahren nach einem oder mehreren der Ansprüche 1–4, dadurch gekennzeichnet, dass noch ein Füllstoff, vorzugsweise Russ eingearbeitet wird.

6. Verfahren nach einem oder mehreren der Ansprüche 1 bis 5, dadurch gekennzeichnet, dass solche Kautschuk-Mischungen vulkanisiert werden, in die der Novolak wenigstens teilweise bei einer Mischungstemperatur oberhalb des Schmelzpunktes des Novolakharzes, vorzugsweise von 80 bis 120°C eingemischt worden ist.

7. Verfahren nach einem oder mehreren der Ansprüche 1 bis 6, dadurch gekennzeichnet, dass Mischungen vulkanisiert werden, die einen Phenol-p-tert.-Butylphenol-, einen Phenol-Octylphenol-, einen Phenol-Nonylphenol-Novolak und/oder einen Novolak aus Phenol und Cashew-Nussschalenöl enthalten.

8. Verfahren nach einem oder mehreren der Ansprüche 1 bis 7, dadurch gekennzeichnet, dass Mischungen vulkanisiert werden, in denen die gesamte Phenolkomponente des Novolaks einen Anteil an Alkylphenol von höchstens 70 Mol-% enthält.

9. Verfahren nach einem oder mehreren der Ansprüche 1 bis 8, dadurch gekennzeichnet, dass Mischungen vulkanisiert werden, deren Novolak-Anteil 1 bis 30, vorzugsweise 3 bis 20 Gew.-%, bezogen auf Kautschuk, ausmacht.

10. Gummiartikel und Kraftfahrzeugreifen, hergestellt nach dem Verfahren eines oder mehrerer der Ansprüche 1 bis 9.

**Claims**

1. Process for the preparation of reinforced vulcanizates by vulcanization of natural or synthetic rubber mixtures with a) novolak resins derived from phenol or alkylphenols respectively and b) melamine resins, characterized in that the melamine resin is a reactive melamine resin which acts as a hardener for the novolak resin, has been obtained by reaction of 1 mol of melamine with 0.5 to 6 mols of aldehyde and is used in an amount of from 2 to 120% by weight, referred to the novolak resin, that the phenolic component of the novolak resin is selected from the group of phenol, bisphenols, alkylphenols, mixtures of alkylphenols with phenol, and, if desired, also contains additions of resorcinol, phenylphenol or polyalkylphenols in an amount such that the molar ratio of the total amount of these additions to the total amount of the other phenols is up to 1:2 and that in any phase of the preparation of the composition, after the novolak resin has been added, the temperature is higher than the melting point of the novolak resin.

2. Process according to claim 1, characterized in that melamine resins are used, the methylol groups of which are etherified at least partially with monohydric alcohols with 1 to 12, preferably to 8 carbon atoms.

3. Process according to claim 1 or 2, characterized in that the vulcanization is effected in the presence of melamine resin in a proportion of from 2 to 80, preferably from 2 to 50% by weight.

4. Process according to one or more of claims 1 to 3, characterized in that the vulcanization is effected in the presence of inorganic or monobasic or dibasic organic acid components with 2 to 20 carbon atoms and/or polyester resins with an acid number of at least 20, the amount of the organic acid component being preferably from 0.1 to 5% by weight, referred to rubber.

5. Process according to one or more of claims 1 to 4, characterized in that there is also incorporated a filler, preferably carbon black.

6. Process according to one or more of claims 1 to 5, characterized in that rubber mixtures are vulcanized in which the novolak at least partly has been incorporated at a mixing temperature above the melting point of the novolak resin, preferably of from 80 to 120°C.

7. Process according to one or more of claims 1 to 6, characterized in that mixtures are vulcanized which contain a phenol-p-tert.-butylphenol novolak, a phenol-octylphenol novolak, a phenol-nonylphenol novolak and/or a novolak derived from phenol and Cashew-nutshell oil.

8. Process according to one or more of claims 1 to 7, characterized in that mixtures are vulcanized in which the total phenol component of the novolak contains a proportion of alkylphenol of at most 70 mol-%.

9. Process according to one or more of claims 1 to 8, characterized in that mixtures are vulcanized in which the proportion of the novolak is from 1 to 30, preferably from 3 to 20% by weight, referred to the rubber.

10. Rubber articles and motor vehicle tyres produced according to the process of one or more of claims 1 to 9.

**Revendications**

1. Procédé de fabrication de vulcanisats renforcés par vulcanisation de mélanges de caoutchouc naturel ou synthétique avec a) des résins novolaques à base de phénol ou d'alkylphénols et b) des résines mélamines, procédé caractérisé en ce que la résine mélamine est une résine mélamine réactive qui agit comme durcisseur pour la résine novolaque, a été obtenue par réaction d'1 mole de la mélamine avec de 0,5 à 6 moles d'aldéhyde et est utilisée en une proportion de 2 à 120% en poids par rapport à la résine novolaque, en ce que le constituant phénolique de la résine novolaque est choisi dans l'ensemble constitué par le phénol, les bisphénols, les alkylphénols, les mélanges d'alkylphénols avec du phénol, ce constituant pouvant encore contenir des additions de résorcinol, de phénylphénol ou de polyalkylphénols en une quantité telle que le rapport molaire de la quantité totale de ces additions à la quantité totale des autres phénols soit au plus égal à 1:2, et en ce que la température à n'importe quelle phase de la préparation du mélange après addition de la résine novolaque dépasse le point de fusion de celle-ci.

2. Procédé suivant la revendication 1, caractérisé en ce qu'on utilise des résines mélamines dont les groupes méthylols sont éthérifiés, au moins partiellement, par des monoalcools ayant de 1 à 12 atomes de carbone, de préférence au plus 8.

3. Procédé suivant l'une des revendications 1 et 2, caractérisé en ce que la vulcanisation est effectuée en présence de résine mélamine en une proportion de 2 à 80, de préférence de 2 à 50% en poids.

4. Procédé suivant l'une quelconque des revendications 1 à 3, caractérisé en ce que la vulcanisation est effectuée en présence de constituants acides minéraux ou mono- ou diacides organiques en C$_2$ à C$_{20}$ et/ou de résines polyesters ayant un indice d'acide d'au moins 20, la proportion du constituant acide organique étant de préférence de 0,1 à 5% en poids par rapport au caoutchouc.

5. Procédé suivant l'une quelconque des revendications 1 à 4, caractérisé en ce qu'on incorpore en outre une charge, de préférence du noir de carbone.

6. Procédé suivant l'une quelconque des revendications 1 à 5, caractérisé en ce qu'on vulcanise des mélanges de caoutchouc dans lesquels la novolaque a été incorporée au moins partiellement à une température de mélange supérieure au point de fusion de la novolaque, de préférence à une température de 80 à 120°C.

7. Procédé suivant l'une quelconque des revendications 1 à 6, caractérisé en ce qu'on vulcanise des mélanges qui contiennent une novolaque phénol/p-tert-butylphénol, phénol/octylphénol, phénol/nonylphénol et/ou une novolaque obtenue à partir de phénol et d'huile de coquilles de noix de cajou.

8. Procédé suivant l'une quelconque des revendications 1 à 7, caractérisé en ce qu'on vulcanise des mélanges dans lesquels le constituant phénolique total de la novolaque contient une proportion d'alkylphénol d'au plus 70% en moles.

9. Procédé suivant l'une quelconque des revendications 1 à 8, caractérisé en ce qu'on vulcanise des mélanges dont la proportion de novolaque représente 1 à 30, de préférence 3 à 20% en poids par rapport au caoutchouc.

10. Articles de caoutchouc et pneumatiques de véhicules fabriqués selon le procédé suivant l'une quelconque des revendications 1 à 9.